# EUROPÄISCHE PATENTSCHRIFT

(11) **EP 0 956 757 B1**
(45) Veröffentlichungstag und Bekanntmachung des Hinweises auf die Patenterteilung: **03.07.2002**
(21) Anmeldenummer: 99103241.8
(22) Anmeldetag: 19.02.1999
(51) Int. Cl.: A01C 15/04, A01C 7/08

(54) **Pneumatisch arbeitende Verteilmaschine mit Flachrohrbogen**
Pneumatic spreader with flat tube bends
Epandeur pneumatique avec coudes tubulaires plats

(30) Priorität: 30.03.1998 DE 19814030
(43) Veröffentlichungstag der Anmeldung: 17.11.1999
(73) Patentinhaber: Kverneland Accord GmbH & Co. KG, 59494 Soest (DE)
(72) Erfinder: Weiste, Helmut, 59494 Soest (DE)
(74) Vertreter: Habbel, Hans-Georg, Dipl.-Ing.

(56) Entgegenhaltungen:
- EP-A- 0 277 288
- EP-A- 0 328 858
- DE-B- 2 256 939
- US-A- 3 606 097
- US-A- 4 215 824
- US-A- 4 717 289
- US-A- 5 033 398
- DATABASE WPI Section PQ, Week 9644 Derwent Publications Ltd., London, GB; Class P11, AN 96-436827 XP002109486 & JP 08 214758 A (YAMAZAKI M), 27. August 1996 (1996-08-27)

## Beschreibung

Die Erfindung betrifft eine pneumatisch arbeitende Verteiimaschine entsprechend des Oberbegriffes des Hauptanspruches.

Pneumatisch arbeitende Verteilmaschinen sind seit langem bekannt und dienen u. a. dem Ausbringen von Saatgut oder Düngemittel. Diese aus der Praxis bekannten Verteilmaschinen weisen einen Vorratsbehälter auf für das Verteilgut und anschließend erfolgt eine Dosierung des Verteilgutes über ein Dosierorgan und anschließend erfolgt eine pneumatische Förderung des Verteilgutes über eine pneumatische Förderleitung zu einem Verteiler, von dem wiederum Leitungen zu den einzelnen Ausbringorganen führen.

Insbesondere bei größeren Verteilmaschinen wird die pneumatische Förderleitung zunächst im wesentlichen waagerecht geführt und anschließend erfolgt ein Richtungswechsel der Förderleitung zu dem weiter oben angeordneten Verteiler, wobei vor dem Verteiler die Förderleitung im wesentlichen senkrecht ausgerichtet ist.

Bei diesem Umlenkpunkt der pneumatischen Förderleitung von einer zunächst flachen Führung in ein senkrechtes Ansteigen zum Verteiler hin erfolgt durch den meist vorhandenen Drall in der Strömung der Förderleitung und durch die Zentrifugalkräfte eine Konzentration der Saatkörner in dem Förderluftstrom an der Außenwandung des Umlenkbogens. Durch diese Konzentration wird eine völlig gleichmäßige Verteilung des Saatgutes im Verteiler und anschließend auf den von dem Verteiler abgehenden Leitungen zu den Ausbringorganen gestört.

Wellrohre oder andere Einbauten in dem senkrecht ausgebildeten Förderrohr unterhalb des Verteilerkopfes sind auf der relativ kurzen Strecke zwischen Umlenkbogen der Förderleitung und Verteilerkopf nicht in der Lage, den einseitigen Saatgutstrom wieder zu zerstreuen.

Es sind Lösungen entwickelt worden, z. B. entsprechend DE-PS 22 56 939, um durch Leitbleche, die in den Umlenkbogen eingebaut werden, den Körnerstrom vor Eintritt in die senkrechte Förderleitung wieder zu zerstreuen. Diese mit Leitblechen ausgestatteten Umlenkbögen sind jedoch nachteilhaft, da der Krümmungsradius des Umlenkbogens relativ groß sein muß, um die Strömungsverluste gering zu halten und durch die Leit- oder Prallbleche wird der gesamte Widerstand des Umlenkbogens erheblich erhöht und darüber hinaus kann es bei verschiedenen Saatgütern zu Kornbeschädigungen kommen. Nachteilhaft sind Leit- oder Prallbleche auch aus dem Grund, daß, wenn sie in der Mitte des Luftstromes angeordnet sind, auch nicht eine optimale Verteilung garantieren, denn an der kurvenäußeren Seite des Umlenkbogens erfolgt die Konzentration des Verteilgutes, so daß das Mittelleitblech nur etwa 1/3 des Körnerstromes erfaßt.

Der Erfindung liegt die Aufgabe zugrunde, eine pneumatische Verteilmaschine zu schaffen, die eine verbesserte Verteilung des Saatgutes innerhalb des senkrechten Zuführrohres zu dem Verteiler ermöglicht ohne Verwendung von Leit- oder Prallblechen, die die obigen Nachteile aufweisen.

Diese der Erfindung zugrundeliegende Aufgabe wird durch die Lehre des kennzeichnenden Teiles des Hauptanspruches gelöst.

Mit anderen Worten ausgedrückt wird vorgeschlagen, im Bereich der Umlenkung der pneumatischen Förderleitung von einem flachen in einen zum Verteiler führenden aufsteigenden Bereich die pneumatische Förderleitung mit einer Querschnittsform zu versehen, die sich von der Form des abgehenden Fördermittels unterscheidet.

Vorteilhafte Ausgestaltungen der Erfindung sind in den Unteransprüchen erläutert.

Ausführungsbeispiele der Erfindung sind in den nachfolgenden Zeichnungen wiedergegeben, wobei
- Fig. 1: in einer Ansicht einen Umlenkpunkt der pneumatischen Förderleitung darstellt,
- Fig. 2: stellt in einer Seitenansicht den Bereich der Förderleitung entsprechend Fig. 1 dar und
- Fig. 3: zeigt ein weiteres Ausführungsbeispiel der Erfindung in einer seitlichen Ansicht.

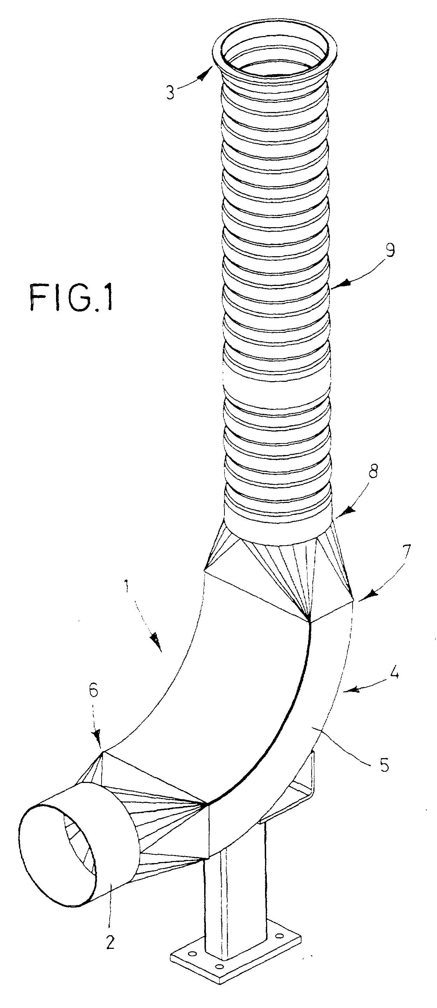

Bezugnehmend auf Fig. 1 ist eine pneumatische Förderleitung 1 teilweise dargestellt, wobei über eine Anschlußmanschette 2 eine Förderleitung (nicht dargestellt) zu dem Dosierorgan und zu dem Vorratsbehälter angeschlossen werden kann. An dem auslaßseitigen Ende 3 schließlich kann eine zum Verteilerkopf (nicht dargestellt) führende Förderleitung angeschlossen werden bzw. der Verteiler kann direkt an dem auslaßseitigen Ende angeschlossen werden, der wiederum Abgangsleitungen zu den jeweiligen Ausbringorganen z. B. für das Düngemittel oder für das Saatgut aufweisen kann.

Der dargestellte Bereich 1 der pneumatischen Förderleitung weist einen Umlenkbogen 4 auf, in dem sich die Richtung der pneumatischen Förderleitung 1 ändert, d. h. von einem in diesem Ausführungsbeispiel im wesentlichen waagerechten Teil in einen senkrecht ausgebildeten Teil, bevor sie den Verteilerkopf erreicht. Dieser Umlenkbogen 4 ist als Flachrohrbogen 5 ausgebildet, der in diesem Ausführungsbeispiel einen rechteckigen Querschnitt aufweist, jedoch beispielsweise auch oval ausgebildet sein kann.

Das zunächst im Querschnitt kreisrund ausgebildete Förderrohr schließt an die Anschlußmanschette 2 an und es erfolgt eine kontinuierliche Veränderung des Querschnittes, bis schließlich bei 6 der für den Flachrohrbogen 5 typische Querschnitt erreicht wurde. Anschließend erfolgt ab 7 eine kontinuierliche Veränderung des Querschnittes des Flachrohrbogens 5, bis letztendlich bei 8 wieder der kreisrunde Querschnitt erreicht wurde. Die pneumatische Förderleitung 1 ist zwischen Flachrohrbogen 5 und Verteiler als Zerstreuungsrohr 9 ausgebildet, wobei in diesem Ausführungsbeispiel das Zerstreuungsrohr 9 ein Wellrohr ist. Es ist jedoch auch möglich, das Zerstreuungsrohr 9 in anderer Art und Weise auszubilden, so daß seine Innenwandungen uneben ausgebildet sind, z. B. durch Noppen an den Innenwandungen, um hierdurch eine optimale Verteilung des Verteilgutes bis zum Verteiler aufrecht zu erhalten.

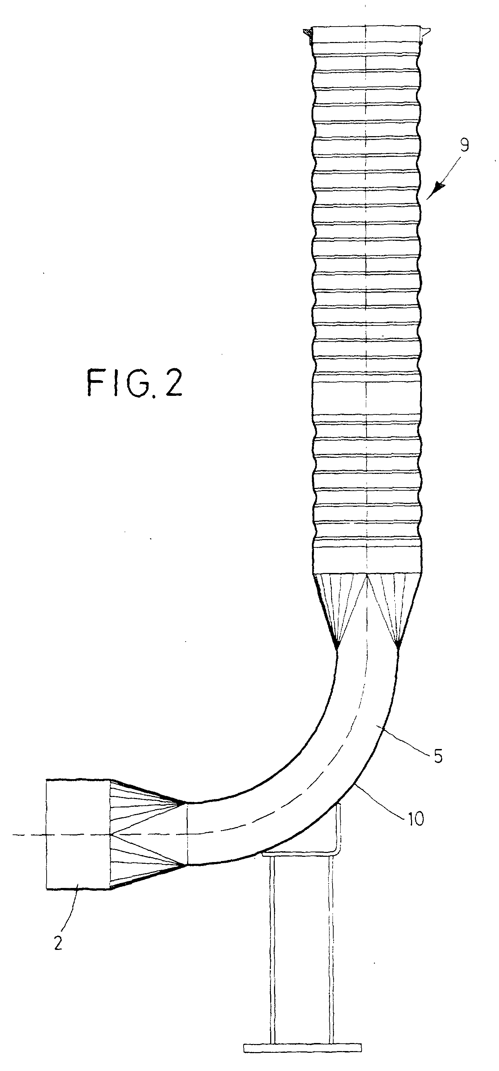

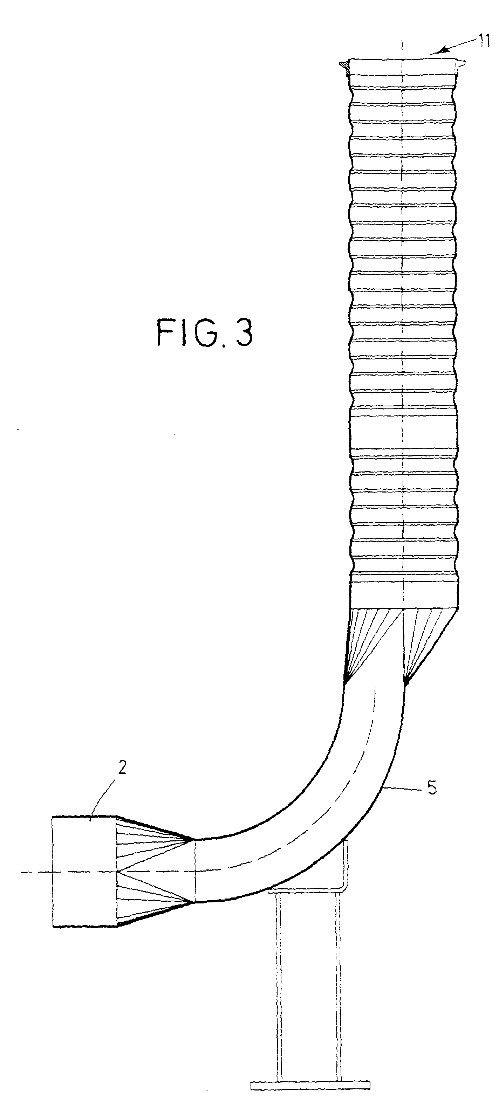

In dem Ausführungsbeispiel entsprechend den Fig. 1 und 2 schließt der Flachrohrbogen 5 mittig an das Zerstreuungsrohr 9 an. Es ist jedoch auch möglich, den Flachrohrbogen 5 asymmetrisch an das Zerstreuungsrohr 9 anschließen zu lassen, wie in Fig. 3 ersichtlich wird. In diesem Ausführungsbeispiel ist eine kurvenäußere Wandung 10 des Flachrohrbogens 5 so angeordnet, daß sie in Höhe einer Mittelachse 11 des Zerstreuungsrohres 9 mündet.

Ein Vorteil des beschriebenen Flachrohrbogens 5 ist, daß keine zusätzlichen Leitbleche erforderlich sind, die die Strömung behindern, sondern nur durch die Außenwandung des Flachrohrbogens 5 selbst wird der Fördergutstrom gezielt und zentral in den Eingangsbereich des Zerstreuungsrohres 9 geleitet. Dieser Effekt wird noch vergrößert, wenn man den flachen Querschnitt nicht entsprechend den Fig. 1 und 2 symmetrisch zum Kreisquerschnitt des Zerstreuungsrohres, sondern versetzt anordnet, wie aus Fig. 3 ersichtlich wird.

Dadurch, daß bei Punkt 7 ein Übergang des unrunden Flachbogens in einen kreisförmigen Querschnitt des Zerstreuungsrohres 9 erfolgt, werden gezielt Teile des Körnerstromes von den Seiten des Flachrohrbogens überkreuz auf die gewellten Wandungen des senkrechten Zerstreuungsrohres 9 gelenkt. Hierdurch wird praktisch in idealer Weise ohne Leitbleche eine Zerstreuung und gleichmäßige Verteilung des Körnerluftstromes erreicht.

In dem flachen Querschnitt des Flachrohrbogens 5 wird evtl. vorhandener Drall der Strömung aufgehoben und es wird verhindert, daß er sich in dem senkrechten Zerstreuungsrohr 9 fortpflanzt.

Ein weiterer Vorteil eines im wesentlichen flachen Querschnittes des Umlenkbogens 4 ist, daß der Krümmungsradius bei gleichem Strömungswiderstand kleiner sein kann. Das ermöglicht eine insgesamt geringere Bauhöhe des Umlenkbogens von der waagerechten Lage der pneumatischen Förderleitung bis zum Verteilerkopf hin.

Das Zerstreuungsrohr 9 kann wie dargestellt gewählt ausgebildet sein, es kann jedoch auch an seinen Innenwandungen genoppt ausgebildet sein, um eine unebene Oberfläche zu erreichen.

## Patentansprüche

1. Pneumatisch arbeitende Verteilmaschine zum Verteilen von Saatgut oder Düngemittel,
mit einem Vorratsbehälter für das Verteilgut,
einem damit in Verbindung stehenden Dosierorgan,
einem Verteiler, der über eine pneumatische Förderleitung mit dem Dosierorgan verbunden ist,
von dem Verteiler führen Leitungen zu einzelnen Ausbringeorganen,
wobei die pneumatische Förderleitung (1) ab einem Umlenkbogen (4) einen Richtungswechsel beschreibt und im wesentlichen senkrecht aufsteigend an den Verteiler herangeführt ist,
**dadurch gekennzeichnet, daß** die Förderleitung (1) im Umlenkbogen (4) als Flachrohrbogen (5) ausgebildet ist, ein Übergang des unrunden Flachrohrbogens in einen kreisförmigen Querschnitt eines Zerstreuungsrohres (9) erfolgt und das Zerstreuungsrohr (9) zwischen Flachrohrbogen (5) und Verteiler uneben ausgebildete Innenwandungen aufweist.

2. Verteilmaschine gemäß Anspruch 1, **gekennzeichnet durch** einen rechteckigen Querschnitt des Flachrohrbogens (5).

3. Verteilmaschine gemäß Anspruch 1, **gekennzeichnet durch** einen ovalen Querschnitt des Flachrohrbogens (5).

4. Verteilmaschine gemäß einem der vorhergehenden Ansprüche, **gekennzeichnet durch** die asymmetrische Einmündung des Flachrohrbogens (5) in das Zerstreuungsrohr (9).

5. Verteilmaschine gemäß Anspruch 4, **gekennzeichnet durch** die Einmündung der kurvenäußeren Wandung (10) des Flachrohrbogens (5) auf Höhe einer Mittelachse (11) des Zerstreuungsrohres (9).

6. Verteilmaschine gemäß einem der vorhergehenden Ansprüche, **gekennzeichnet durch** die zumindest teilweise uneben ausgebildeten Innenwandungen des Flachrohrbogens (5).

7. Verteilmaschine gemäß Anspruch 6, **gekennzeichnet durch** die Oberfläche der Innenwandung der kurvenäußeren Wandung (10) des Flachrohrbogens (5), die uneben ausgebildet ist.

8. Verteilmaschine gemäß einem der vorhergehenden Ansprüche, **gekennzeichnet durch** den Querschnitt der an den Flachrohrbogen ankommenden Förderleitung und der vom Flachrohrbogen (5) abgehenden Förderleitung, der als Kreisfläche ausgebildet ist.

9. Verteilmaschine gemäß einem der vorhergehenden Ansprüche, **gekennzeichnet durch** die Ausbildung des Zerstreuungsrohres (9) als Wellrohr.

## Claims

1. Pneumatically operating distribution machine for distribution of seed or fertiliser, with a storage container for the product to be distributed, a metering device associated with it, and a distributor connected via a pneumatic feed line with the metering device, from the distributor, lines lead to individual delivery devices, whereby the pneumatic feed line (1) exhibits a change of direction downstream of a deflector bend (4) and is arranged mainly upright on the distributor, **characterised in that** feed line (1) is configured in deflector bend (4) as a flat pipe bend (5), there is a transition from the non-spherical section flat tube bend to a circular-section of a dispersal tube (9) and the dispersal tube (9) has unevenly configured inner walls between flat pipe bend (5) and the distributor.

2. Distribution machine in accordance with Claim 1, **characterised by** a rectangular section in flat pipe bend (5).

3. Distribution machine in accordance with Claim 1, **characterised by** an oval section in flat pipe bend (5).

4. Distribution machine in accordance with one of the above claims, **characterised by** the asymmetrical transition from flat pipe bend (5) into dispersal tube (9).

5. Distribution machine in accordance with Claim 4, **characterised by** the transition of the wall (10) of the flat pipe bend (5) outside of the curve to the height of a centreline (11) of dispersal tube (9).

6. Distribution machine in accordance with one of the above claims, **characterised by** the at least partially unevenly configured inner walls of flat pipe bend (5).

7. Distribution machine in accordance with Claim 6, **characterised by** the surface of the inside face of wall (10) on the outside of the curve of flat pipe bend (5) which is configured unevenly.

8. Distribution machine in accordance with one of the above-mentioned claims, **characterised by** the cross-section of the feed line arriving at the flat pipe bend and the feed line departing from flat pipe bend (5) which is configured as a curved surface.

9. Distribution machine in accordance with one of the above mentioned claims, **characterised by** the configuration of dispersal tube (9) as a corrugated tube.

## Revendications

1. Machine de distribution pneumatique servant à distribuer des semences ou de l'engrais, comprenant un réservoir pour la matière à distribuer, un organe de dosage relié à celui-ci, un distributeur qui communique avec l'organe de dosage par une conduite de transport pneumatique, des conduites menant du distributeur à différents organes d'épandage, dans laquelle la conduite de transport pneumatique (1) change de direction à partir d'un coude de déviation (4) et monte de façon sensiblement verticale jusqu'au distributeur, **caractérisée en ce que** la conduite de transport (1) est conçue au niveau du coude de déviation (4) comme un coude de tuyau plat (5), une transition est ménagée entre le coude de tuyau plat non circulaire et une section circulaire d'un tuyau de dispersion (9) et le tuyau de dispersion (9) présente entre le coude de tuyau plat (5) et le distributeur des parois intérieures non planes.

2. Machine de distribution selon la revendication 1, **caractérisée en ce que** le coude de tuyau plat (5) a une section rectangulaire.

3. Machine de distribution selon la revendication 1, **caractérisée en ce que** le coude de tuyau plat (5) a une section ovale.

4. Machine de distribution selon l'une ou l'ensemble des revendications précédentes, **caractérisée en ce que** l'embouchure du coude de tuyau plat (5) dans le tuyau de dispersion (9) est asymétrique.

5. Machine de distribution selon la revendication 4, **caractérisée en ce que** la paroi (10) du coude de tuyau plat (5) située à l'extérieur du coude débouche au niveau d'un axe médian (11) du tuyau de dispersion (9).

6. Machine de distribution selon l'une ou l'ensemble des revendications précédentes, **caractérisée en ce que** les parois intérieures du coude de tuyau plat (5) sont au moins partiellement non planes.

7. Machine de distribution selon la revendication 6, **caractérisée en ce que** la surface intérieure de la paroi (10) du coude de tuyau plat (5) située à l'extérieur de la courbe n'est pas plane.

8. Machine de distribution selon l'une ou l'ensemble des revendications précédentes, **caractérisée en ce que** la section de la conduite de transport arrivant au coude de tuyau plat et de la conduite de transport partant du coude de tuyau plat (5) est circulaire.

9. Machine de distribution selon l'une ou l'ensemble des revendications précédentes, **caractérisée en ce que** le tuyau de dispersion (9) est conçu comme un tube ondulé.
